# EUROPÄISCHE PATENTANMELDUNG

(11) **EP 1 734 687 A1**
(43) Veröffentlichungstag der Anmeldung: **20.12.2006**
(21) Anmeldenummer: 06011040.0
(22) Anmeldetag: 30.05.2006
(51) Int. Cl.: H04L 12/10, H04L 12/26, G06F 1/26, H04B 3/46, H04B 3/54, H04L 25/02

(54) **Aktives Leitungsprüfgerät zur Erkennung der Leistungsfähigkeit eines Netzwerkanschlusses**

(30) Priorität: 13.06.2005 DE 202005009309 U
(71) Anmelder: Wilhelm Rutenbeck Gmbh & Co. KG, 58579 Schalksmühle (DE)
(72) Erfinder: Bünger, Frank, 58553 Halver (DE)
(74) Vertreter: Köchling, Conrad-Joachim

(57) **Zusammenfassung**

Die Erfindung betrifft ein aktives Leitungsprüfgerät (1) zur Erkennung der Leistungsfähigkeit eines Netzwerkanschlusses (2-6), bestehend aus einem Gehäuse in Form eines Handgerätes mit einem Steckanschluss (8) für ein Patchkabel (7), insbesondere in Form einer ISDN-Buchse, vorzugsweise des Typs RJ 45, sowie folgenden vorzugsweise auf einer Leiterplatte im Gehäuse installierten Bauteilen: ein Übertrager (9), ein Sender (10), ein Empfänger (11), ein Encoder (12), ein Decoder (13), eine erste Anzeigevorrichtung (14), ein erster Gleichrichter (15), ein zweiter Gleichrichter (16), eine Auswertelogik (17) und eine zweite Anzeigevorrichtung (18), wobei der Übertrager (9) mit den Sende- und Empfangskontakten der Steckbuchse (8) verbunden ist, und der Übertrager (9) mit dem Sender (10) und dem Empfänger (11) kommunizierend verbunden ist, der Sender (10) mit dem Encoder (12) sowie der Empfänger (11) mit dem Decoder (13) kommunizierend verbunden ist und der Decoder (13) sowie der Encoder (12) mit der ersten Anzeigevorrichtung (14) gekoppelt ist, wobei der erste Gleichrichter (15) mit den belegten Kontakten der Steckbuchse (8) verbunden ist, an den Übertrager (9) der zweite Gleichrichter (16) angeschlossen ist und beide Gleichrichter (15,16) an die Auswertelogik (17) und diese an die zweite Anzeigevorrichtung (18) gekoppelt ist.
Das Leitungsprüfgerät ermöglicht die Messung der Leistung, die von einem Ethernet oder LAN Anschluß geliefert werden kann (Stichwort: power over Ethernet).

## Beschreibung

Die Erfindung betrifft ein aktives Leitungsprüfgerät zur Erkennung der Leistungsfähigkeit eines Netzwerkanschlusses.

Es ist üblich, Netzwerke zum Zwecke der Datenübermittlung zu erstellen, beispielsweise in Firmen, Büros oder dergleichen. Hierzu ist an zentraler Stelle ein Anschluss für aktive Geräte (Switch/Hub) vorgesehen.

Ein solcher Anschluss ist mittels eines Patch-Kabels mit einem Verteiler in Form eines Patchpanels verbunden. Das Patchpanel wiederum ist mit einem fest verbundenen Installationskabel mit Anschlussdosen verbunden, die dezentral angeordnet sind und entsprechende Steckbuchsen, beispielsweise ISDN-Steckbuchsen, insbesondere des Typs RJ 45, aufweisen. Der Benutzer kann damit dezentral entsprechende Geräte über die Anschlussdose anschließen.

Es besteht ein Bedarf dahin, festzustellen, ob an einer solchen Anschlussdose die Möglichkeit zum Anschluss von Zusatzgeräten besteht, die eine eigene Stromversorgung benötigen, ohne dass ein zusätzliches Netzgerät vorgesehen werden muss, was eine elektrische Anschluss-Steckdose oder dergleichen notwendig machen würde. Solche Anschlusselemente sind beispielsweise eine Web-Cam oder andere Geräte.

Ausgehend von diesem Stand der Technik liegt der Erfindung die Aufgabe zugrunde, ein aktives Leitungsprüfgerät entsprechender Art zur Verfügung zu stellen, welches kostengünstig zur Verfügung gestellt werden kann und einfach zu handhaben ist. Hierzu schlägt die Erfindung ein aktives Leitungsprüfgerät gemäß Anspruch 1 vor. Vorzugsweise ist das Gerät als Handgerät ausgebildet, bei dem in dem Gehäuse entsprechende elektronische und elektrische Bestandteile untergebracht sind, vorzugsweise auf einer Leiterplatte oder dergleichen. Als Anschluss ist eine Steckanschlussbuchse, beispielsweise eine ISDN-Buchse, vorzugsweise des Typs RJ 45 vorgesehen, die acht Kontakte aufweist.

Bevorzugte Weiterbildungen der Erfindung sind in den Unteransprüchen angegeben. Mittels eines derartigen Leitungsprüfgerätes ist es möglich, an der entsprechenden Anschlussdose unmittelbar die Leistungsfähigkeit eines Netzwerkanschlusses zu überprüfen. Mittels des Leitungsprüfgerätes ist es möglich festzustellen, ob ausreichend Energie für die Versorgung von zusätzlichen an der Anschlussdose anzuschließenden Aggregaten zur Verfügung steht und ebenso festzustellen, wie viel Energie tatsächlich zur Verfügung steht. Der Übertrager ist insbesondere dazu bestimmt, eine galvanische Trennung zwischen der Prüfseite und der Leitungsseite der Gesamtinstallation einschließlich Leitungsprüfgerät herzustellen. Zum Beispiel sind die Anschlusskontakte 1 bis 3 und 6 der Anschlussbuchse für die Sendung und den Empfang von Daten bestimmt. Insbesondere sind die Kontakte 1 und 2 zur Sendung und der Kontakt 3 und 6 zum Empfang von Daten bestimmt. Die Anschlüsse sind über den Übertrager galvanisch entkoppelt und nachfolgend sind die Sendeanschlüsse 1 und 2 über den Sender und den Encoder, vorzugsweise über eine folgende Treiberstufe, mit der Anzeigevorrichtung in Form einer LED oder einer LCD verbunden. Die Anschlusskontakte 3 und 6, die für den Empfang von Daten bestimmt sind, sind über den Übertrager entkoppelt mit dem Empfänger des Leitungsprüfgerätes verbunden, der wiederum über einen Decoder und eine Treiberstufe mit der LED oder LCD-Anzeige verbunden ist. Die belegten Anschlüsse 4,5 beziehungsweise 7,8 sind über einen ersten Gleichrichter geführt, wodurch eine Gleichrichtung erfolgt und eine Polungsunabhängigkeit erreicht wird. Auch der Übertrager ist an einen zweiten Gleichrichter angeschlossen. Beide Gleichrichter sind vorzugsweise über ein elektronisches Filter und eine Überspannungsschutzschaltung mit einer Strombegrenzungsschaltung verbunden, die wiederum mit einer Auswertelogik verbunden ist, an welche eine weitere Anzeigevorrichtung beispielsweise in Form einer LED oder LCD Anzeige geschlossen ist. Die beiden Anzeigevorrichtungen können auch in einer gemeinsamen Anzeigevorrichtung ausgebildet sein. Der zweite Gleichrichter empfängt von dem Übertrager Signale, ob eine aktive Leistung zur Verfügung steht. Die Gleichrichtung erfolgt wiederum wegen der Polungsunabhängigkeit.

Der Überspannungsschutz dient zum Schutz der Auswertelogik, wenn zum Beispiel einer der Gleichrichter defekt ist oder eine Überspannung am Anschluss auftritt. Die Gleichspannung aus den Gleichrichtern wird gefiltert, so dass eine saubere Spannung zur Auswertung zur Verfügung steht. Durch die Strombegrenzungsschaltung ist eine Schutzschaltung für die Auswertelogik gebildet.

Die Auswertelogik stellt fest, ob das zu überprüfende System eine ausreichende Spannung zur Verfügung stellt und wie viel Energie dem System entnommen werden kann.

Durch einen Klassifizierungs- und einen Lastwiderstand wird die maximal mögliche Leistung an diesem Netzwerkanschluss ermittelt.

Hierzu ist die Auswertelogik mit einer Anzeige für die PoE (Power over Ethernet) ausgestattet, sowie mit einer zusätzlichen Anzeige für die Leistungsfähigkeit entsprechend der Klassifizierung 0 bis 4. Die über die Treiberstufe an den Encoder und den Decoder angeschlossene Anzeigevorrichtung dient zur Anzeige der Leistungsfähigkeit des Netzwerkanschlusses, insbesondere zur Anzeige der Datenrate in beispielsweise 10/100 MBit oder auch in Gigabit, einer Anzeige der Verbindung zum Switch/Hub Link, einer Anzeige der Aktivität, einer Anzeige der Betriebsart (Voll- oder Halbduplex).

Das Leitungsprüfgerät ist mit einer eigenen Stromversorgung in Form einer Batterieversorgung versehen, wobei eine automatische zeitabhängige Schaltung vorgesehen ist, so dass nach einer manuellen Einschaltung der Stromquelle eine automatische Abschaltung nach beispielsweise 20 Sekunden erfolgt. Auf diese Weise ist das Gerät im Normalzustand stromlos, um die Batterie zu schonen. Nur für die Messung wird das Gerät aktiviert.

Ein entsprechendes Gerät und eine Anordnung, bei der das Gerät angewandt wird, ist in der Zeichnung schematisch dargestellt. Es zeigt:
- Figur 1: ein erfindungsgemäßes Gerät in Ansicht;
- Figur 2: eine Anordnung, bei der ein solches Gerät zur Anwendung kommt;
- Figur 3: ein Blockschaltbild des elektrischen/elektronischen Aufbaus des Leitungsprüfgerätes.

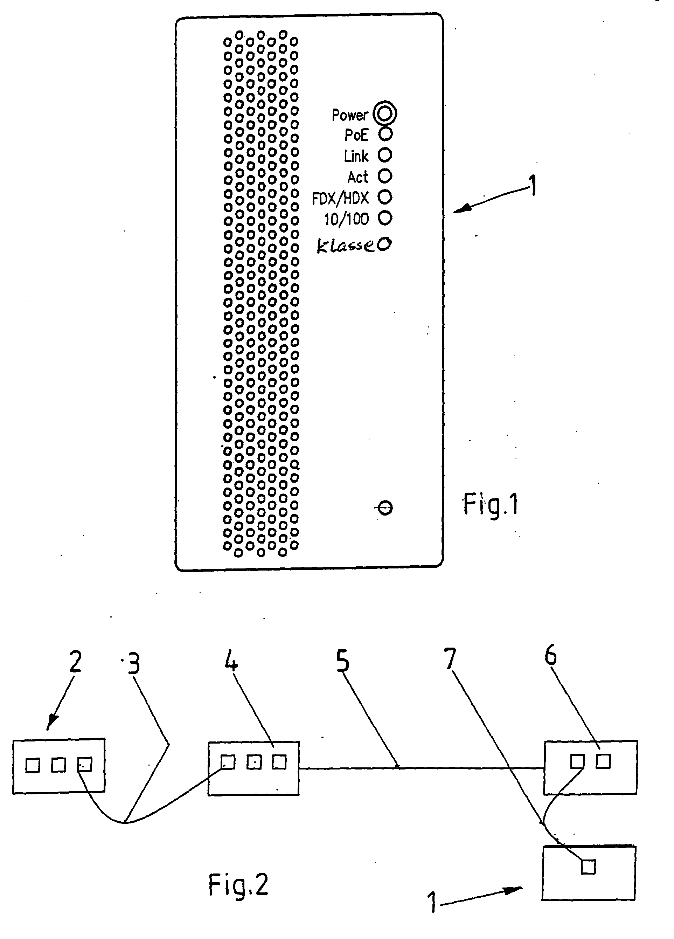

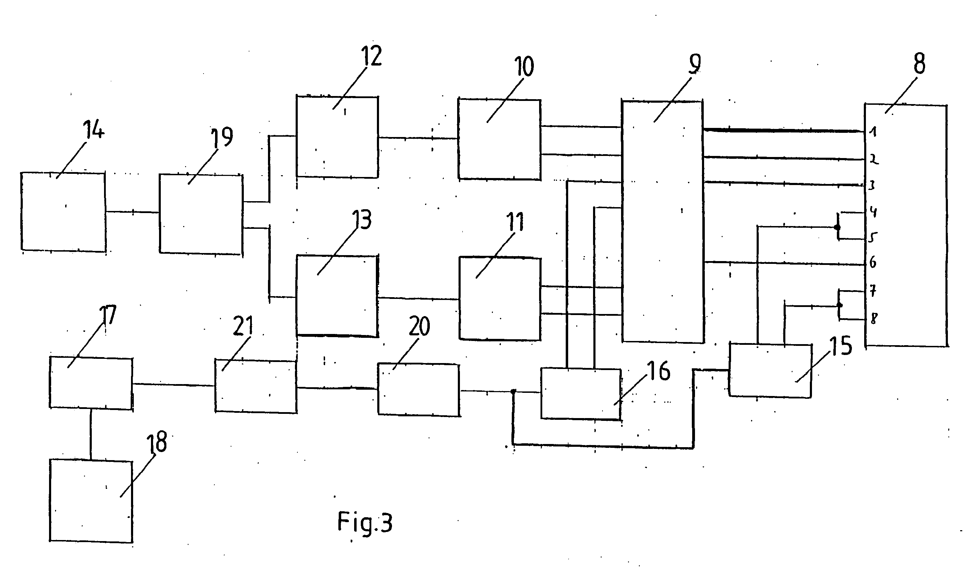

In der Zeichnung ist in Figur 1 ein aktives Leitungsprüfgerät 1 zur Erkennung der Leistungsfähigkeit eines Netzwerkanschlusses gezeigt. Ein solcher üblicher Netzwerkanschluss ist in Figur 2 gezeigt. Bei 2 ist ein zentraler Anschluss für aktive Geräte, beispielsweise ein Switch/Hub gezeigt. Dieser Anschluss 2 ist über ein Patchkabel 3 mit einem Patchpanel 4 verbunden, und die Verbindung erfolgt über Steckbuchsen und Stecker. Das Patchpanel 4 ist über ein festes Installationskabel 5 mit einer Anschlussdose 6 verbunden, die dezentral angeordnet ist. Es können mehrere Anschlussdosen 6 über entsprechende Installationskabel mit dem Patchpanel verbunden werden. Zur Überprüfung der Leistungsfähigkeit des Netzwerkanschlusses wird das aktive Leitungsprüfgerät 1 über ein entsprechendes Kabel 7 mit der Anschlussdose 6 verbunden. Die Anschlussdose 6 und das Leitungsprüfgerät 1 weist hierzu entsprechende Steckbuchsen der üblichen ISDN-Norm, insbesondere des Typs RJ 45, auf. In Figur 3 sind die wesentlichen Elemente des Leitungsprüfgerätes als Blockschaltbild gezeigt. Im Gehäuse des Leitungsprüfgerätes 1 ist eine Steckbuchse 8, insbesondere in Form einer ISDN-Buchse, vorzugsweise des Typs RJ 45 angeordnet. Diese Steckbuchse 8 weist acht Anschlusskontakte 1 bis 8 auf. Des Weiteren sind eine Reihe von elektronischen oder elektrischen Bestandteilen in das Gehäuse des Leitungsprüfgerätes 1 integriert, beispielsweise auf einer Platine angeordnet. Es handelt sich dabei um den Übertrager 9, einen Sender 10, einen Empfänger 11, einen Encoder 12, einen Decoder 13, eine erste Anzeigevorrichtung 14, einen ersten Gleichrichter 15, einen zweiten Gleichrichter 16, eine Auswertelogik 17 und eine zweite Anzeigevorrichtung 18.

Des Weiteren ist eine Treiberstufe 19, ein elektronischer Filter und eine Verpolschutzschaltung 20 sowie eine Strombegrenzungsschaltung 21 vorgesehen. Die Kontakte 1 und 2 der Buchse 8 sind mit dem Übertrager 9 verbunden und dienen zum Senden von Daten, während die Anschlüsse 3 und 6 ebenfalls mit dem Übertrager 9 verbunden ist und zum Empfang von Daten dienen.

Der Übertrager 9 ist ein elektrisches oder elektronisches Element, weiches eine galvanische Trennung zwischen dem Prüfungsschaltteil und dem Leitungsschaltteil darstellt. Der Übertrager 9 kommuniziert über entsprechende Verbindungen mit dem Sender 10 sowie mit dem Empfänger 11. Der Sender 10 wiederum kommuniziert mit dem Encoder (verschlüsseler) 12, während der Empfänger 11 mit dem Decoder (Entschlüsseler) 13 kommuniziert. Sowohl der Encoder als auch der Decoder 12, 13 sind über die Treiberstufe 19 mit der Anzeigevorrichtung 14 in Form einer LED oder LCD Anzeige verbunden. Die Anzeige 14 dient insbesondere zur Anzeige der Datenrate, zur Anzeige der Verbindung "Link" zum Switch/Hub oder dergleichen, zur Anzeige der Aktivität und zur Anzeige der Betriebsart (Voll- bzw. Halbduplex).

Die belegten Anschlüsse 4,5 bzw. 7,8 der Buchse 8 sind auf den Gleichrichter 15 gelegt. Der Übertrager 9 ist wiederum über entsprechende Anschlüsse auf den Gleichrichter 16 gelegt. Beide Gleichrichter 15,16 sind über die Filter /Verpolschutzschaltung 20 sowie die Strombegrenzungsschaltung 21 an die Auswertelogik 17 angeschlossen, die wiederum mit der zweiten Anzeige 18 verbunden ist, auf welcher die Verfügbarkeit von PoE am Netzwerkanschluss angezeigt wird, sowie die Leistungsfähigkeit von PoE am Netzwerkanschluss entsprechend Klasse 0 bis 4.

Die Erfindung stellt mit einfachen Mitteln ein entsprechendes Leitungsprüfgerät zur Verfügung, welches als Handgerät ausgebildet ist und daher einfach zu handhaben ist und zu bedienen ist und mittels dessen unmittelbar an einer Anschlussdose 6 in einfacher Weise geprüft werden kann, ob der Anschluss von Zusatzgeräten ohne eigene Stromversorgung möglich ist und welche Energiemenge gegebenenfalls zur Verfügung steht.

Die Erfindung ist nicht auf das Ausführungsbeispiel beschränkt, sondern im Rahmen der Offenbarung vielfach variabel.

Alle neuen, in der Beschreibung und/oder Zeichnung offenbarten Einzel- und Kombinationsmerkmale werden als erfindungswesentlich angesehen.

## Patentansprüche

1. Aktives Leitungsprüfgerät (1) zur Erkennung der Leistungsfähigkeit eines Netzwerkanschlusses (2-6), bestehend aus einem Gehäuse in Form eines Handgerätes mit einem Steckanschluss (8) für ein Patchkabel (7), insbesondere in Form einer ISDN-Buchse, vorzugsweise des Typs RJ 45, sowie folgenden vorzugsweise auf einer Leiterplatte im Gehäuse installierten Bauteilen: ein Übertrager (9), ein Sender (10), ein Empfänger (11), ein Encoder (12), ein Decoder (13), eine erste Anzeigevorrichtung (14), ein erster Gleichrichter (15), ein zweiter Gleichrichter (16), eine Auswertelogik (17) und eine zweite Anzeigevorrichtung (18), wobei der Übertrager (9) mit den Sende- und Empfangskontakten der Steckbuchse (8) verbunden ist, und der Übertrager (9) mit dem Sender (10) und dem Empfänger (11) kommunizierend verbunden ist, der Sender (10) mit dem Encoder (12) sowie der Empfänger (11) mit dem Decoder (13) kommunizierend verbunden ist und der Decoder (13) sowie der Encoder (12) mit der ersten Anzeigevorrichtung (14) gekoppelt ist, wobei der erste Gleichrichter (15) mit den belegten Kontakten der Steckbuchse (8) verbunden ist, an den Übertrager (9) der zweite Gleichrichter (16) angeschlossen ist und beide Gleichrichter (15,16) an die Auswertelogik (17) und diese an die zweite Anzeigevorrichtung (18) gekoppelt ist.

2. Leitungsprüfgerät nach Anspruch 1, **dadurch gekennzeichnet, dass** die Elemente des Leitungsprüfgerätes (1) mittels einer im Gerät angeordneten Batterie spannungsversorgt sind.

3. Leitungsprüfgerät nach Anspruch 2, **dadurch gekennzeichnet, dass** die Batterie über einen am Gerät zugänglich angeordneten Schalter einschaltbar und über eine zeitabhängige Schaltung abschaltbar ist.

4. Leitungsprüfgerät nach einem der Ansprüche 1 bis 3, **dadurch gekennzeichnet, dass** zwischen Encoder (12) sowie Decoder (13) und der ersten Anzeigevorrichtung (14) eine Treiberstufe (19) für die Anzeigevorrichtung (14) eingeschaltet ist.

5. Leitungsprüfgerät nach einem der Ansprüche 1 bis 4, **dadurch gekennzeichnet, dass** zwischen die Gleichrichter (15,16) und die Auswertelogik (17), ein elektronischer Filter (20), eine Verpolschutzschaltung (20) und/oder eine Strombegrenzungsschaltung (21) eingeschaltet ist.

6. Leitungsprüfgerät nach einem der Ansprüche 1 bis 5, **dadurch gekennzeichnet, dass** die erste und zweite Anzeigevorrichtung (14,18) durch optische Anzeigen, zum Beispiel LED oder ein Display, insbesondere LCD-Display gebildet ist.

7. Leitungsprüfgerät nach einem der Ansprüche 1 bis 6, **dadurch gekennzeichnet, dass** die erste Anzeige-vorrichtung (14) Anzeigen für die Datenrate, für die Verbindung zu einem Link, zum Beispiel Switch oder Hub, für die Aktivität, für die Betriebsart, Voll- oder Halbduplex, aufweist, und die zweite Anzeigevorrichtung (18) Anzeigen für die Verfügbarkeit von PoE am Netzwerkanschluss sowie für die Leistungsfähigkeit von PoE entsprechend Klasse O bis 4 aufweist.

8. Leitungsprüfgerät nach einem der Ansprüche 1 bis 7, **dadurch gekennzeichnet, dass** der Übertrager (9) ein elektrisches oder elektronisches Element ist, das eine galvanische Trennung zwischen dem Prüfschaltungsteil und dem Leitungsschaltungsteil darstellt.
